# EUROPEAN PATENT SPECIFICATION

(11) **EP 3 897 118 B1**
(45) Date of publication and mention of the grant of the patent: **06.03.2024**
(21) Application number: 19832657.1
(22) Date of filing: 19.12.2019
(51) Int. Cl.: A01K 73/02, B63B 35/16, B63B 35/26

(54) **FISHING VESSEL COMPRISING A SYSTEM FOR TRANSFERRING FISH FROM A FISHING GEAR AND INTO AN INNER SPACE OF A FISHING VESSEL**
FISCHEREISCHIFF MIT EINEM SYSTEM ZUM TRANSFER VON FISCHEN VON EINEM FANGGERÄT IN EINEN INNENRAUM EINES FISCHEREISCHIFFS
BATEAU DE PÊCHE COMPRENANT UN SYSTÈME DE TRANSFERT DE POISSONS DEPUIS UN ENGIN À PÊCHE ET JUSQUE DANS UN ESPACE INTÉRIEUR D'UN BATEAU DE PÊCHE

(30) Priority: 20.12.2018 NO 20181665
(43) Date of publication of application: 27.10.2021
(73) Proprietor: Ulstein Design & Solutions AS, 6067 Ulsteinvik (NO)
(72) Inventor: HATLØY, Bjørnar Leonard, 6065 Ulsteinvik (NO); KVALSUND, Erlend, 6040 Vigra (NO); ROALDSNES, Tore Harald, 6040 Vigra (NO)
(74) Representative: Plougmann Vingtoft a/s
(86) International application number: PCT/EP2019/086260
(87) International publication number: WO 2020/127697

(56) References cited:
- WO-A1-2018/222053
- GB-A- 655 643
- SU-A1- 772 916
- US-A1- 2005 087 119

## Description

### FIELD OF THE INVENTION

The present invention relates to a fishing vessel, e.g. a fishing vessel used for fishing by towing a trawl through a body of water. In particular, it relates to a fishing vessel comprising a system for transferring the caught fish from an inner region of the fishing gear and into an inner space of the hull, such as a tank, without the need to lift the fish out of the body of water.

### BACKGROUND OF THE INVENTION

Various fishing methods exist in which the caught fish are retained in an inner region of the fishing gear during fishing and have to be transferred onto a fishing vessel. Such methods include fishing by use of trawl, such as by bottom trawl and pelagic trawl, or ring net. The fishing vessel can either transport the fish ashore for further handling, or they can be handled on-board the vessel - both situations require that the fish are transferred into the inner space of the hull. The transfer of the fish from the fishing gear and into the inner space of the hull, such as a tank or a factory, typically takes place by either sucking-on-board caught fish from net, e.g. pelagic trawl, or by pulling the whole trawl onto the deck of the ship typically along a slipway arranged in the stern of the ship. The sucking and pulling both have physiological impacts on the caught fish as well as increase the stress level in the fish, both of which decrease the quality of the caught fish. For instance, the pulling of the fishing gear hauling fish out of water and onto the deck results in that at least some of the fish in the body of fish in the fishing gear will be exposed to an often lethal compression force, either by the mass of the fish themselves or from a compression provided by pulling-in the fishing gear.

WO2018222053 A1 discloses a system and a method for hauling fish gear, such as longlines, gillnets or demersal seine nets, into a fishing vessel and collecting and transporting catch to a working station, using a hatch in a part of a hull exposed to the sea and arranged in a water line region of the vessel; a vertical well for receipt of at least a part of the catch through the hatch; a transport device for transporting the catch to the deck; and with means for bringing the catch to flow towards the transport device. The transport device used is arranged in a shaft, separated from the well, and a closable opening or hatch is arranged in a wall or bulkhead between the well and the shaft and with a device for opening and closing the opening or hatch, a bottom in the shaft arranged at a lower level than the lower end of the closable opening or hatch and a water level in the well; and a device for reducing the water level in the shaft.

Hence, an improved fishing vessel would be advantageous, and in particular a more efficient and lenient way of transferring the caught fish from a fishing gear and into an inner space of the hull of the fishing vessel would be advantageous.

### OBJECT OF THE INVENTION

It is an object of the present invention to provide a fishing vessel and a method with which caught fish can be transferred from a fishing gear and into an inner space of the hull of the fishing vessel in a more efficient manner than with prior art methods.

It is an object of the present invention to provide a fishing vessel and a method with which caught fish can be transferred from a fishing gear and into an inner space of the hull of the fishing vessel with less stress being applied to the fish than with prior art methods, which in turn leads to better quality of the catch.

It is another object of the present invention to provide a fishing vessel and a method with which caught fish can be transferred from a fishing gear and into an inner space of the hull of the fishing vessel with which more fish are kept alive than with prior art methods.

It is an object of at least some embodiments of the present invention to provide a fishing vessel and a method with which caught fish can be transferred from a fishing gear and into an inner space of the hull of the fishing vessel with which the working environment for the people working on-board the vessel is safer than with prior art methods.

It is a further object of the present invention to provide an alternative to the prior art.

In particular, it may be seen as an object of the present invention to provide a fishing vessel and method that solves the above mentioned problems of the prior art.

### SUMMARY OF THE INVENTION

Thus, the above-described object and several other objects are intended to be obtained in a first aspect of the invention by providing a fishing vessel according to claim 1.

The transfer opening may e.g. be a permanent opening in the fishing gear, such opening possibly being covered by a removable closure during fishing. However, it may also be an opening which is established by partly or fully separating two parts of the fishing gear as will be described in further details below and in relation to the figures.

The at least one delivery opening will in the presently preferred embodiments be below the water level as will also be shown in the figures. However, the scope of the invention also covers embodiments having the at least one delivery opening located above the water level.

Furthermore, the at least one delivery opening as well as the fishing gear mover will typically be arranged at the stern of the fishing vessel to ensure a stable design with respect to weight distribution and general convenience. However, if desired for other reasons these parts of the system may also be arranged at other positions.

The process of transferring the fish from the inner region of the at least one fishing gear by use of the transfer means, might e.g. include to apply a slight low pressure in a container or tank into which the fish are transferred. This may e.g. be relevant in situations when an increased transfer speed of the fish is required.

The primary parking position of the fishing gear mover will in the presently preferred embodiment be at a position right below the engagement position keeping it from interfering with operations and keeping it protected, as will be shown in the figures. However, the parking position may alternatively be at another location, such as in a secondary parking position below the delivery position and the engagement position or above the engagement position, if desired. It may e.g. be advantageous to use a parking position above the water level, as the parts will then be less prone to corrosion and algae growth.

By "releasably connected" is preferably meant that the first and second trawl sections can be fully released and separated from each other and that they may be - but not necessarily are - fully disconnected from each other as part of the method to be described below. However, the term "releasably connected" also covers embodiments wherein the first and second trawl parts are designed to be only partly disconnected from each other and designed to be separated to an extent making it possible to transfer the fish through the transfer opening.

In such an embodiment with at least one trawl, in addition to the main functioning of the at least one guide when coupled to the at least one connector, a further advantage of the at least one guide is that the at least one trawl is guided therein and therefore does not move transversely to the pulling direction, when it is pulled onto the deck. Hereby the risk of hurting, such as crushing, the people working on-board the fishing vessel is lowered in case they need to work near the trawl.

In some embodiments of the invention wherein the at least one fishing gear is at least one trawl, the transfer means comprises lifting means used to lift the distal end of the at least one trawl. An example of such an embodiment will be described in the figures. Such lifting means may e.g. be a wire extending from the distal end, arranged through the A-frame, a crane, or other lifting means of the fishing vessel, and connected to a winch or other pulling means of the fishing vessel. The lifting means may also comprise other wires connected to other parts of the trawl, if it is necessary to apply a lifting force at more locations along the net or fishing gear in general. The A-frame is a mechanical, tiltable, erect structure, the purpose of which is to move an elevated pulley along one or two axis, typically in a circular motion. It serves as an axis crane. This device renders it possible to shift the lifting point, the pulley, for a winch from the deck area on board, over the stern of the vessel, and to a position over the water astern of the vessel.

In embodiments wherein the fishing is performed with at least one trawl, and wherein the fish are transferred to a tank, a separate one of each of the at least one tank may be associated with each of the at least one trawl. Hereby a safer solution may be obtained, since if one trawl, tank, or pump breaks, the rest still operational.

A fishing vessel as described in any of the embodiments above may further comprise a vertically movable gate arranged adjacent to the deck at a distance from a stern of the fishing vessel, which gate can move between:
- a lower gate position in which an upper edge of the gate is flush with the deck or located below the deck, and
- an upper position in which the gate can lift the at least one fishing gear to a height in which, for each fishing gear, the connector becomes aligned with the guide of the fishing gear mover provided that the connector is positioned between the guide and the gate before the gate is moved from the lower gate position to the upper position.

Such a gate will provide an increased safety for the people working on-board the fishing vessel, as it may block the passage to the fishing gear mover when it moves between the different positions. By "vertically" is not necessarily meant that the gate extends in a vertical plane. It may also be arranged at an inclined angle.

For each fishing gear, auxiliary winches or other lifting means may be connected to the at least one connector for assisting the positioning of the connector in the guide of the fishing gear mover. This may be relevant, as large forces may need to be applied to a connector in order to manoeuvre it into the engagement with the associated guide. Hereby the demands on the manual efforts from the people working on-board can be lowered and the working environment can thereby be improved. Such auxiliary winches or other lifting means can preferably apply both translational and rotational forces to the connector in order to facilitate the engagement.

The at least one guide may comprise a locking mechanism for establishing the releasable locking between the at least one guide and the at least one connector. Hereby a higher safety against unintentional disconnection is obtained.

In some embodiments of the invention, the fishing gear mover is forced towards the delivery opening. This may e.g. be obtained by having the lowest part of the slipway designed with a step or with a different angle, such that the gap between the fishing gear mover and the slipway is reduced to a minimum in the delivery position.

In a preferred embodiment, the movement of the fishing gear mover is provided by one or more hydraulic piston actuators with the piston rod attached to the fishing gear mover and the cylinder housing attached to the vessel. Thereby, extension and retraction of the piston rod will provide the movement of the fishing gear mover.

The number of fishing gear may be one to five, such as three. When the fishing gear is trawl, the fishery is typically conducted with one, two or three trawls depending on the type of fish, the conditions, and the ship's equipment. Fishery with four trawls and one ship is being tested and might be normal in the future. Fishery with more than four trawls is not currently done in commercial fishery, but it will also be covered by the scope of the present invention.

When there are more than one fishing gear, they can be handled and emptied in parallel in order to speed up the process.

Another aspect of the invention relates to a method according to claim 7 of transferring fish from an inner region of at least one fishing gear into an inner space of a hull of a fishing vessel according to any one of claims 1-6.

When such a method is a method for transferring fish into at least one inner space in the form of at least one tank in a fishing vessel according to the embodiments including the use of at least one trawl as described above, the method may comprise the following steps:
- while the fishing gear mover is in the parking position, pulling the at least one trawl partly onto the deck by use of the pulling means, so that for each of the at least one trawl, the connector is located on or above the deck while the inner volume containing caught fish remains in the water, and so that each of the at least one second trawl section is aligned with one of the at least one guide of the fishing gear mover, and
- moving the fishing gear mover to the engagement position whereby each of the at least one second trawl section becomes partly surrounded by one of the at least one guide,
   performing one of the following sequences of steps for each of the at least one trawl:
      a) :
         - letting the trawl move aft wards until the second connector part is brought into engagement with the surrounding guide,
         - establishing a releasable locking between the guide and the second connector part,
         - disconnecting the first connector part from the second connector part, and
         - pulling the first trawl section away from the second trawl section and onto the deck for temporary storage, or
      b) :
         - disconnecting the first connector part from the second connector part,
         - optionally pulling the first trawl section (13) away from the second trawl section (5) and further onto the deck for temporary storage,
         - letting the second trawl section (5) move aft wards until the second connector part is brought into engagement with the surrounding guide, and
         - establishing a releasable locking between the guide and the second connector part, then:
         - moving the fishing gear mover to the delivery position so that the at least one second connector part is brought into alignment with a corresponding delivery opening,
         - opening the at least one delivery opening, and
         - lifting the distal end of each of the at least one second trawl section upwards and out of the water by use of the lifting means so that fish in the inner volume of the second trawl section are hereby forced to move into the tank via the delivery opening,
   subsequent to completing the delivery of fish into the at least one tank:
      - closing the at least one delivery opening, and
      - moving the fishing gear mover with the at least one second connector part still locked thereto into the engagement position,
   performing one of the following sequences of steps for each of the at least one trawl:
      a) :
         - pulling the first trawl section (13) towards the second trawl section (5),
         - connecting the first connector part to the second connector part to form an assembled connector,
         - releasing the connection between the second connector part and the guide,
         - pulling the connector away from the guide and onto the deck, or
      b) :
         - releasing the connection between the second connector part and the guide,
         - pulling the second connector part away from the guide and onto the deck,
         - connecting the first connector part to the second connector part to form an assembled connector (11), and
   then:
      - moving the fishing gear mover into the parking position while ensuring that the at least one trawl is not caught by the fishing gear mover, and
      - letting the at least one trawl slide back into the water ready for resumed towing behind the fishing vessel or pulling the entire at least one trawl onto the deck for storage or repair.

If the fishing vessel comprises a gate as described above, the method may comprise the following steps:
- bringing the gate into the lower gate position before the step of pulling the at least one trawl partly onto the deck,
- subsequent to the step of moving the fishing gear mover into the engagement position and prior to bringing the at least one second connector part into engagement with the at least one guide, letting the at least one trawl move aft wards until the at least one connector is located between the gate and the fishing gear mover,
- then bringing the gate into the upper position thereby lifting the at least one trawl upwards in order to assist the subsequent movement of the at least one second connector part into engagement with the at least one guide, and
- bringing the gate into the lower gate position before the at least one first connector part is disconnected from the at least one second connector part.

This means that the gate can be used to facilitate the handling of the at least one fishing gear when the at least one connector is to be engaged with the at least one guide.

Such a method including the use of a gate may further comprise the step of bringing the gate into the upper position subsequent to the step of pulling the at least one first trawl section away from the at least one second trawl section and onto the deck and maintaining the gate in the upper position until the delivery of fish from the inner volume of the at least one trawl and into the at least one tank has been completed. Hereby the gate is used to provide safety to the people working on-board the fishing vessel, since the access to the region of the deck around the fishing gear mover will be blocked during the delivery of fish into the inner space of the hull, such as into the at least one storage tank.

A method as just described may further comprise the following step:
subsequent to moving the fishing gear mover with the at least one second connector part still locked thereto into the engagement position, bringing the gate into the lower gate position. Hereby the people working on-board can freely walk towards the fishing gear mover in order to re-establish the connection between the first connector part and the second connector part in embodiments of the invention wherein the fishing gear have two separable parts in the form of a first trawl section and a second trawl section as described above.

The first and second aspect of the present invention may each be combined. These and other aspects of the invention will be apparent from and elucidated with reference to the embodiments described hereinafter.

### BRIEF DESCRIPTION OF THE FIGURES

The fishing vessel and method according to the invention will now be described in more detail with regard to the accompanying figures. The figures show one way of implementing the present invention and is not to be construed as being limiting to other possible embodiments falling within the scope of the attached claim set.

In particular, the fishing vessel and method is described in the following in relation to fishing with trawl which is towed behind the fishing vessel and wherein the fish are transferred into a tank where they are stored alive. However, as described above this is an example of a presently preferred embodiment but not limiting to the scope of protection, as other fishing methods are also possible.
Figure 1 shows schematically a fishing vessel towing a trawl. In this embodiment a triple trawl.
Figure 2 shows schematically a trawl comprising a first trawl section connected to a second trawl section via a connector. In this embodiment the first and second trawls sections is fully disconnected. In other embodiments, these can be only partly disconnected.
Figure 3 shows schematically an embodiment of a fishing gear mover for use on a fishing vessel according to the invention. Figure 3.a shows the fishing gear mover in the secondary parking position; figure 3.b shows the fishing gear mover in the engagement position, and figure 3.c shows the fishing gear mover in the delivery position.
Figure 4 shows schematically an embodiment of the invention comprising a movable gate. Figure 4.a shows the gate in the lower gate position, and figure 4.b shows the gate in the upper position.
Figure 5 shows schematically the trawl being pulled partly onto the deck of the fishing vessel.
Figure 6 shows schematically the fishing gear mover being moved from the primary parking position and into the engagement position. Figure 6.a shows the fishing gear mover in the primary parking position, and figure 6.b shows the engagement position.
Figure 7 shows schematically how the trawl is allowed to move aft wards in order to bring the connector into engagement with the guide of the fishing gear mover. Figure 7.a shows the gate in the lower gate position, figure 7.b shows the gate in the upper position, and figure 7.c shows the connector arranged in the guide.
Figure 8 shows schematically an embodiment of a connector. Figure 8.a shows the connector seen from above, engaged in the guide, and figure 8.b shows the connector arranged in the guide.
Figure 9 shows schematically the disconnection of the first connector part from the second connector part. In this embodiment the first and second trawls sections is fully disconnected. In other embodiments, these can be only partly disconnected. Figure 9.a shows the gate in the lower position, and figure 9.b shows the gate in the upper position in which it blocks the access to the fishing gear mover.
Figure 10 shows schematically the fishing gear mover in the delivery position.
Figure 11 shows schematically the progressive lifting of the distal end of the second trawl section.
Figure 12 shows schematically the fishing gear mover returned to the engagement position after delivery of the fish into the storage tank. Figure 12.a shows the gate in the upper position, and figure 12.b shows the gate in the lower position.
Figure 13 shows schematically how the fishing vessel is prepared for resumed fishing. Figure 13.a shows the second trawl sections distal end still lifted; figure 13.b shows the second trawl section brought back into the body of water; figure 13.c shows the connector released from the guide and arranged on the deck; figure 13.d shows the fishing gear mover in the secondary parking position so that the trawl can be returned to the body of water without being caught in the guide.

### DETAILED DESCRIPTION OF AN EMBODIMENT

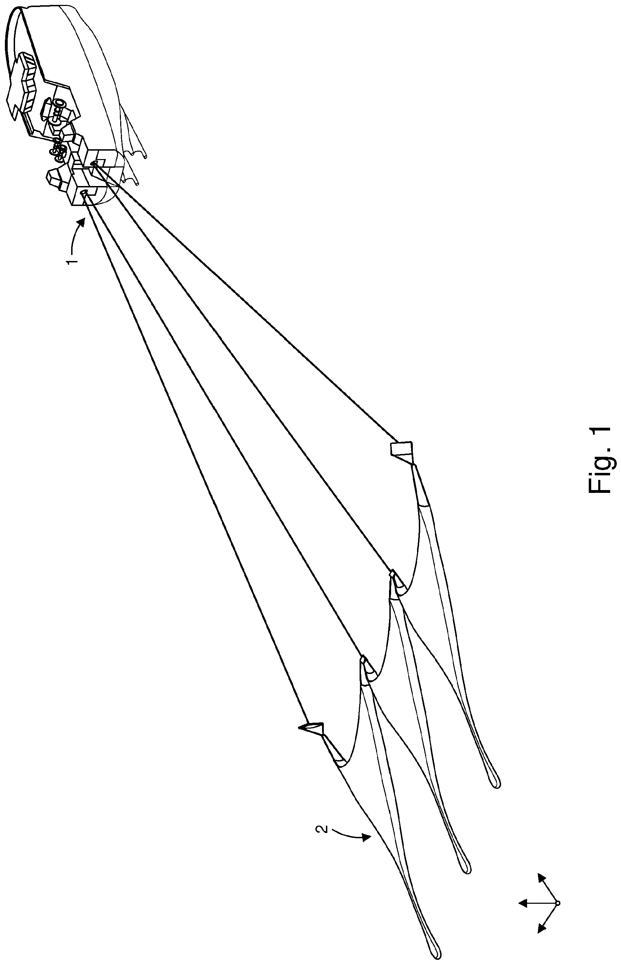

The present invention relates to a fishing vessel 1 comprising a hull with a stern and a deck as shown in figure 1. The fishing vessel 1 also comprises many other features as will be well known to a person skilled in the art and which are therefore not mentioned here. The fish are stored alive in a restitution tank wherein oxygen is injected, and wherein the water is cooled and pressurised. This is to lower the stress of the fish and to let the lactic acid and hormones subside, leaving the meat whiter and better tasting.

As will be described in further details below, the caught fish are transferred into the tank through a delivery opening 14 which is preferably arranged below the surface of the body of water so that the fish can be transferred without being taken out of the water. The delivery opening 14 is preferably arranged in the stern of the vessel 1 as shown in the figures.

The illustrated fishing vessel 1 further comprises at least one trawl adapted to catch fish and to retain the caught fish alive in an inner volume of the trawl when the at least one trawl is towed behind the fishing vessel 1 through a fish-containing body of water during fishing. In the following figures, only one trawl is shown in order to obtain a high clarity of the illustrations and a simpler language in the description. However, as mentioned above, the number of trawls may be one to five, such as three. When there is more than one trawl, they can be handled and emptied in parallel in the same manner as will be illustrated for one trawl only. The figures show three delivery openings 14 in accordance with the presently preferred embodiment even though only one trawl is shown. The number of delivery openings 14 are as many as the maximum number of trawls the fishing vessel 1 is equipped to handle.

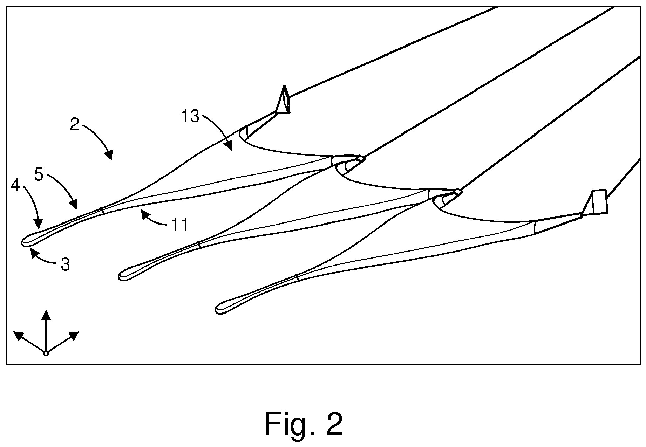

Figure 2, shows schematically that the trawl comprises a first trawl section 13 with a trawl opening through which fish can enter the inner volume, and a second trawl section 5 with a closed distal end 3. The distal end 3 is the end of the trawl furthest away from the trawl opening. The trawl may comprise other sections as well as will be well known to a person skilled in the art, but here and in the following only these two sections will be referred to. The first trawl section 13 and the second trawl section are releasably connected to each other via a connector 11. In the illustrated embodiment, this connector 11 comprises a first connector part and a second connector part both in the form of a ring. However, other designs and shapes are also possible, such as having the second connector part fastened directly to the net of the first trawl section 13, e.g. by sewing. The first connector part is mounted to the first trawl section 13 at the end thereof opposite the trawl opening. The second connector part is mounted to the second trawl section at the end thereof opposite the distal end 3.

The fishing vessel 1 being described in the figures comprises a system for transferring fish from the inner volume of the trawl into a tank via the delivery opening 14 after disconnection of the first trawl section 13 from the second trawl section. This system and how it is used will be described in the following. Preferably, a separate tank is associated with each trawl. However, it will also be possible to transfer fish from a plurality of trawls via a corresponding number of delivery openings 14 and into one or more storage tank(s).

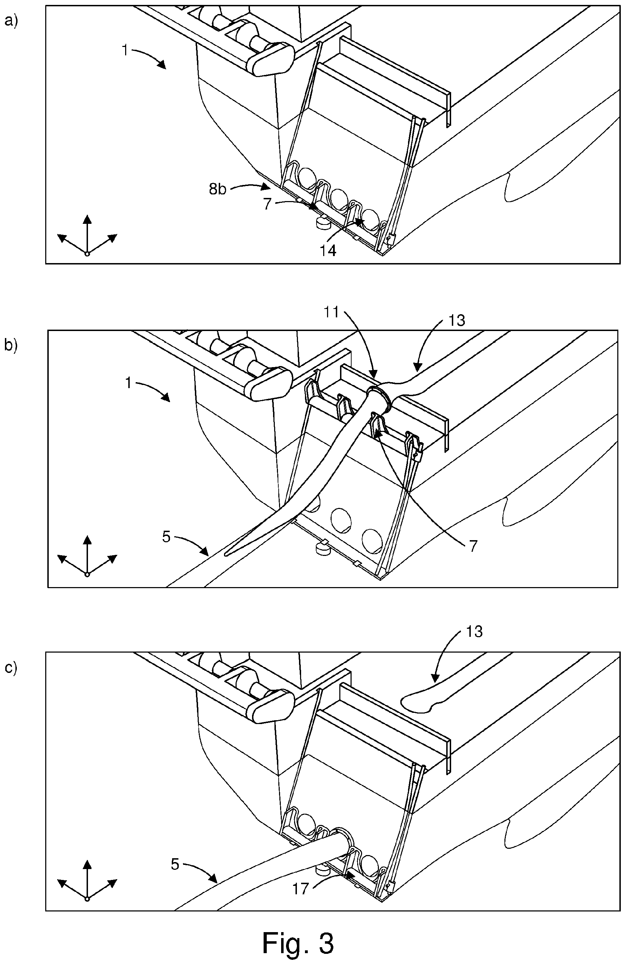

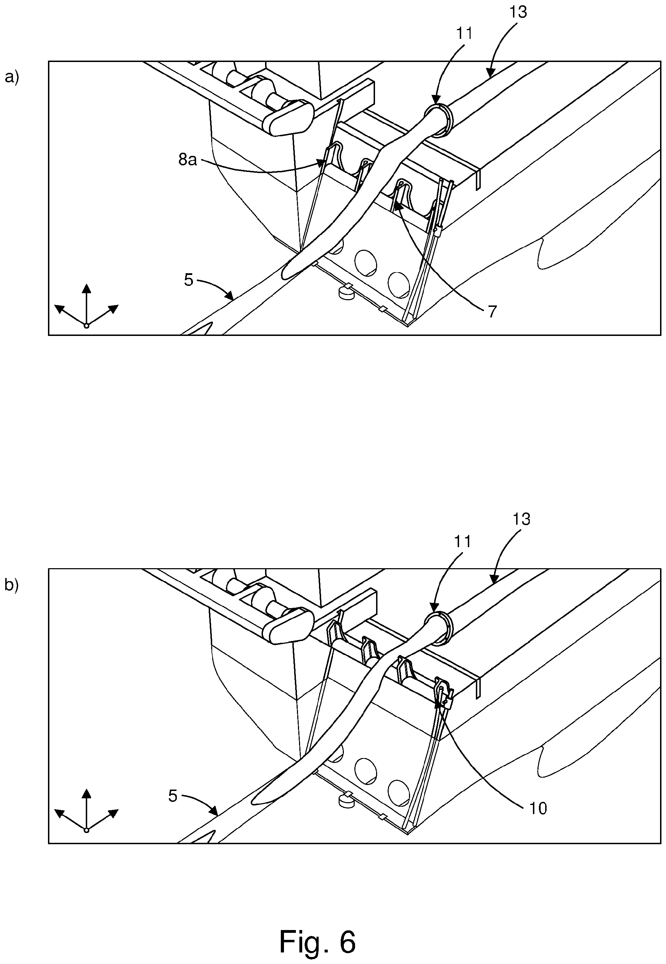

The system comprises a fishing gear mover 7 which is arranged adjacent to the stern. The fishing gear mover 7 is movable between the positions which are shown schematically in figure 3. In this and the following figures, the starboard part of the vessel 1 has been removed from the figure to better illustrate the invention. This includes the starboard most part of the A-frame lifting device. Figure 3.a shows the secondary parking position 8b in which the fishing gear mover 7 is out of engagement with the trawl. This secondary parking position 8b is shown to be adjacent to the delivery openings 14 in the figure 3.a, but it could also be e.g. just above the delivery openings 14, or in its primary parking position 8a in figure 6.a. Figure 3.b shows the engagement position at or near the deck of the fishing vessel 1; the use thereof is described below. Figure 3.c shows the delivery position 17 in which caught fish are transferred from the trawl and into the storage tank.

The fishing gear mover 7 in figure 3 comprises three guides. In correspondence with only one trawl being shown for better clarity as mentioned above, the following description will refer to one of the three guides only. The guide is used to releasably lock the fishing gear mover 7 to the second connector part of the trawl so that the fishing gear mover 7 can move the second connector part to the delivery position 17 in which the second connector part is aligned with the delivery opening 14.

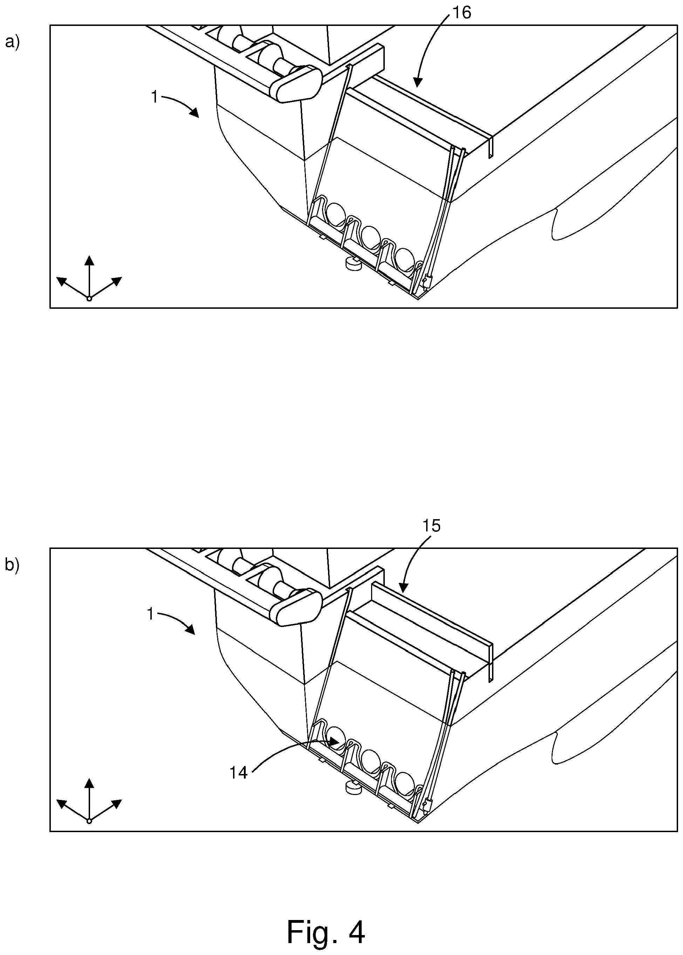

The illustrated embodiment of the fishing vessel 1 comprises a vertically movable gate 15 arranged adjacent to the deck at a distance from the stern. The gate can move between a lower position 16 in which an upper edge of the gate 15 is flush with the deck or located below the deck as shown in figure 4.a and an upper position as shown in figure 4.b. The upper edge is typically rounded. In the upper position, the gate 15 can lift the trawl to a height in which the connector 11 becomes aligned with the guide of the fishing gear mover 7 provided that the connector 11 is positioned between the guide and the gate 15 before the gate 15 is moved from the lower gate position 16 to the upper lifting position.

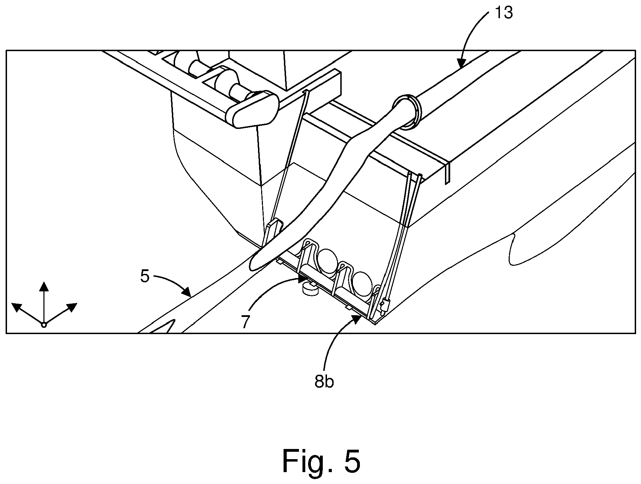

The fishing vessel 1 and how the system it comprises is used for transferring fish from an inner volume of the trawl into the tank will now be described in further details. Figure 5 shows how the trawl is first partly pulled onto the deck by use of pulling means in the form of a wire. This is done with the fishing gear mover 7 in the secondary parking position 8b and with the gate 15, if present, in the lower gate position 16. The pulling action is continued until the connector 11 is located on or above the deck while the inner volume containing caught fish remains in the water. The arrangement of the trawl with respect to the fishing vessel 1 should be so that the second trawl section is aligned with the corresponding guide of the fishing gear mover 7.

The fishing gear mover 7 is then moved along the stern and towards the engagement position as shown in figure 6.a. Hereby the second trawl becomes partly surrounded by the corresponding guide of the fishing gear mover 7 as shown in figure 6.b.

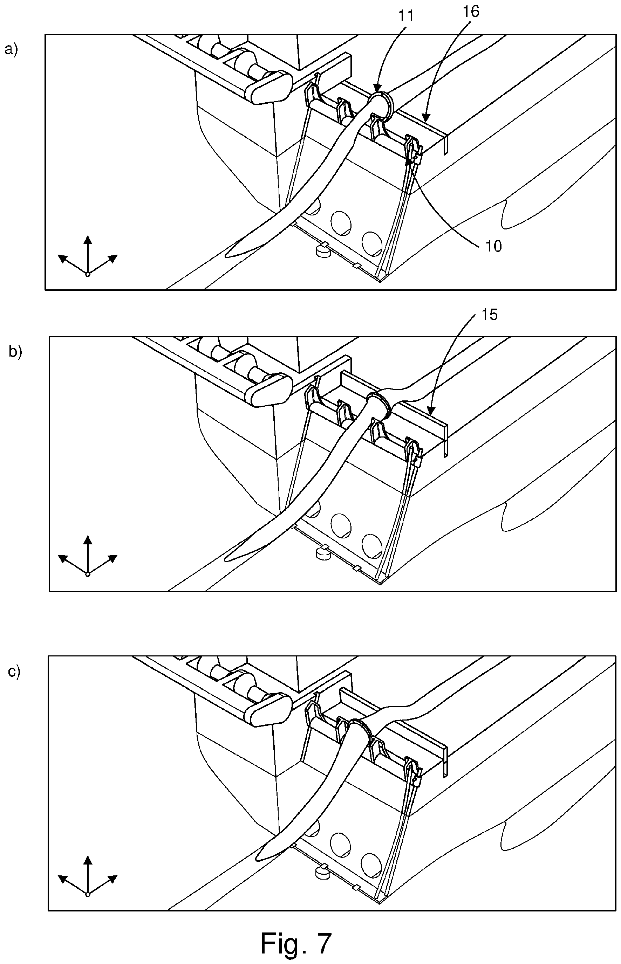

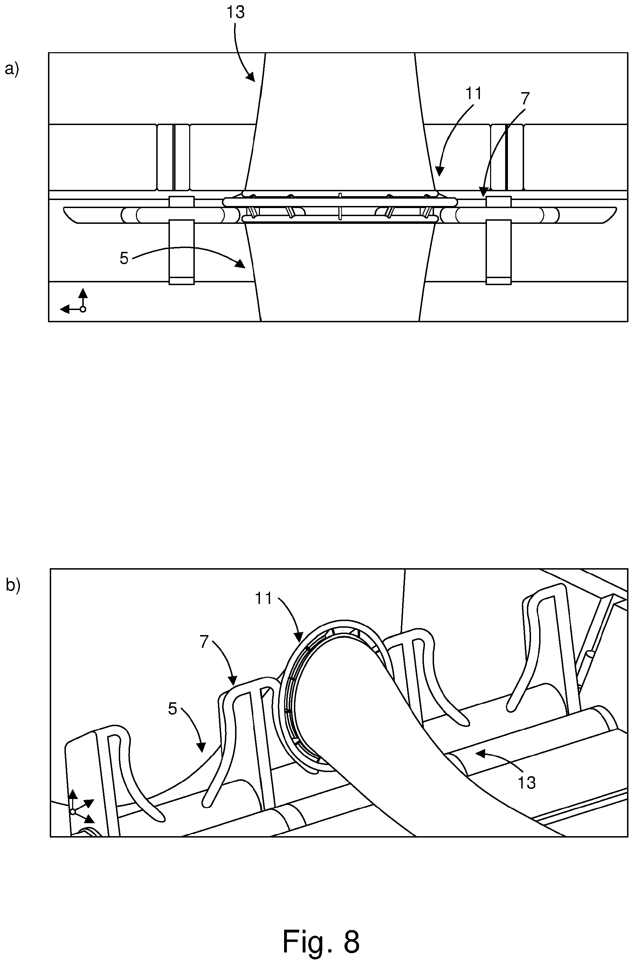

As shown in figure 7.a, the trawl is then made to move aft wards. This is done by, in a controlled manner, partly releasing the pulling force applied by the pulling means whereby the weight of the fish and the surrounding part of the trawl pulls the trawl aft wards until the connector 11 is located between the gate 15 and the fishing gear mover 7. The gate 15 is then brought into the upper position as shown in figure 7.b thereby lifting the trawl upwards in order to assist the subsequent movement of the second connector part into engagement with the guide as shown in figure 7.c. Figure 8 shows an embodiment of the connector 11 which comprises a first connector part being part of the first trawl section 13 and a second connector part mounted to the second trawl section. As previously described in relation to figure 2, the first connector part may e.g. be a separate part, e.g. in the form of a ring, or it may be part of the net forming the first trawl section 13. The movement of the connector 11 into engagement with the guide may include the use of auxiliary winches or other lifting means 18, for assisting the positioning of the connector 11 in the guide of the fishing gear mover 7. The use of auxiliary winches may be necessary due to the large forces involved. Hereby the demands on the manual efforts from the people working on-board can be lowered and the working environment can thereby be improved. Such auxiliary winches can preferably apply both translational and rotational forces to the connector 11 in order to facilitate the engagement.

Figure 8.a shows a top view of the connector 11 engaged with the guide. Figure 8.b shows the connector 11 arranged in the guide. The guide may comprise a locking mechanism (not shown) for establishing a releasable locking between the at least one guide and the at least one second connector part to ensure that they are not unintentionally disengaged, e.g. during the later transfer of fish into the tank.

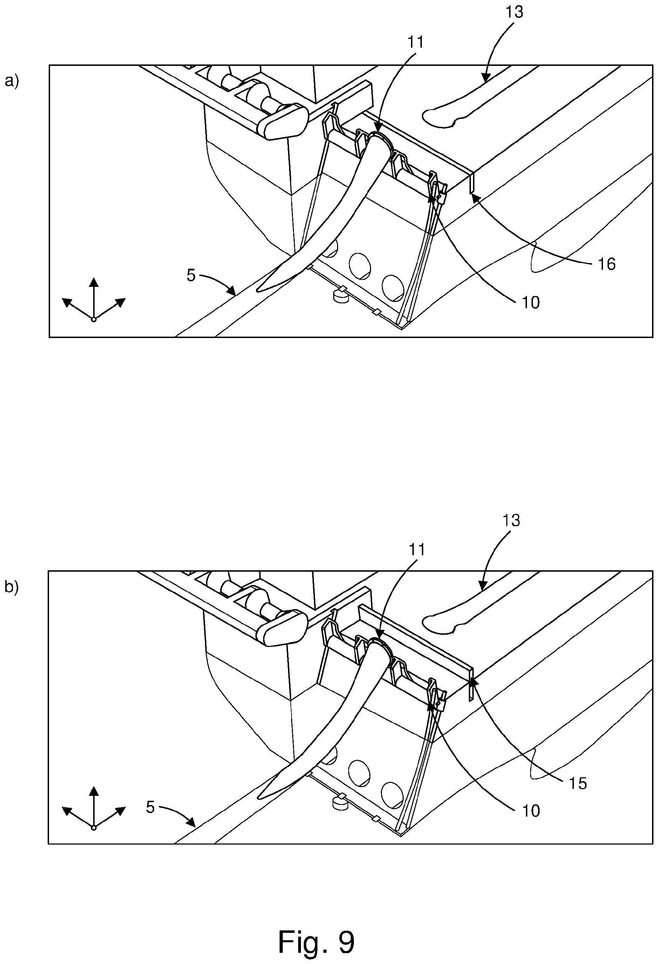

When a releasable engagement, and possibly locking, between the surrounding guide and the second connector part, has been established, the gate 15 is brought into the lower gate position before the first connector part is disconnected from the second connector part. The first trawl section 13 is then pulled away from the second trawl section and onto the deck for temporary storage as shown in figure 9.a. The gate 15 is now brought into the upper position, as shown in figure 9.b, where it remains until the delivery of fish from the inner volume of the at least one trawl and into the at least one storage tank has been completed. Hereby people are prevented from getting too close to the fishing gear mover 7 during its movement (i.e. safety), and waves do not so easily splash onto the deck in heavy weather conditions.

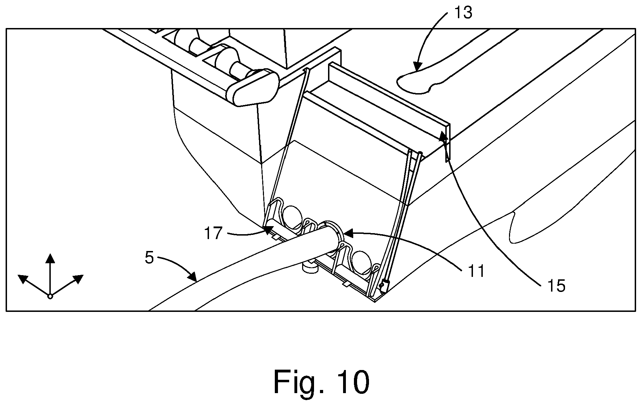

As shown in figure 10, the fishing gear mover 7 is moved to the delivery position 17 so that the second connector part is brought into alignment with a corresponding delivery opening 14. In the delivery position 17, it is ensured that a correct and stable arrangement of the second connector part and the delivery opening 14 is maintained until the transfer of fish has been concluded.

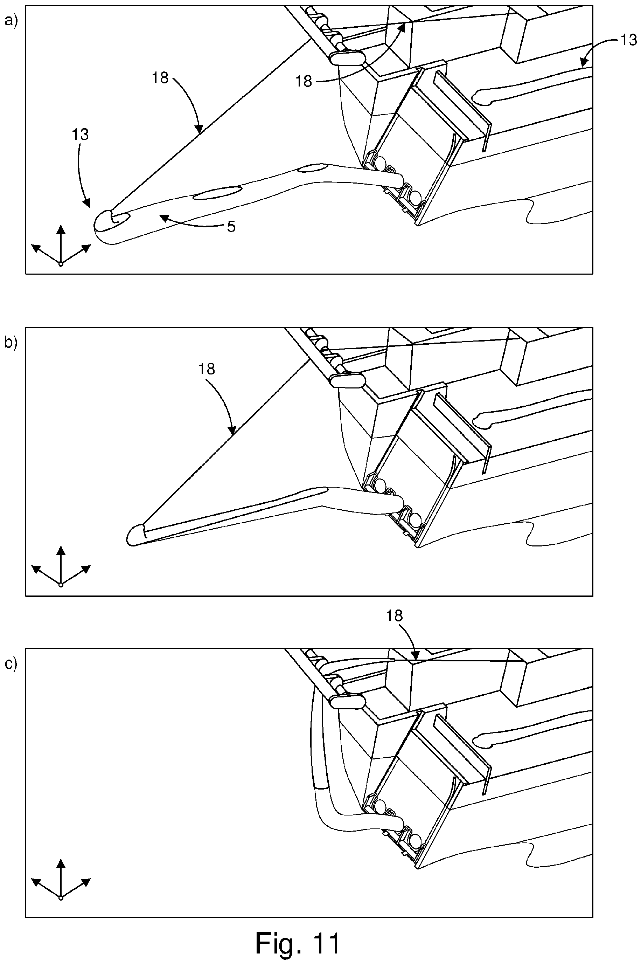

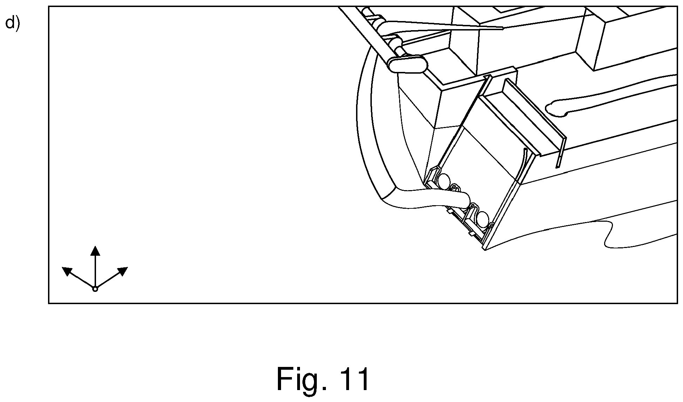

When the second connector part has been safely arranged at the delivery opening 14, the latter is opened so that caught fish can be made to move into the tank. This is done by lifting the distal end 3 of the second trawl section upwards and out of the water by use of the lifting means 18 so that fish in the inner volume of the second trawl section are hereby forced to move into the storage tank via the delivery opening 14. The progress of this lifting and transferring process is shown schematically in figure 11. In the illustrated embodiment, the lifting means 18 is a wire/rope arranged over the A-frame of the fishing vessel 1. The pulling action is typically established by use of a winch (not shown). The process of moving the fish from the inner volume of the at least one trawl, might be aided by an applied slight under pressure in the at least one tank, in situations when an increased transfer speed of the fish is required. The rope is fastened in the distal end 3 of the second trawl section and is loosely fastened on top of the trawl section all the way to the connector 11, where it is fastened to the top of the connector 11 by some mean. A wire with a hook goes from a winch trough the A-frame and down to the trawl deck. Before the fishing gear mover 7 is lowered, the rope is released from the connector 11 and instead fasten to this hook. The connection with the hook then travels through the A-frame while pulling the rope. When the second trawl section has been emptied, this process has to be done in reverse for each of the trawl sections.

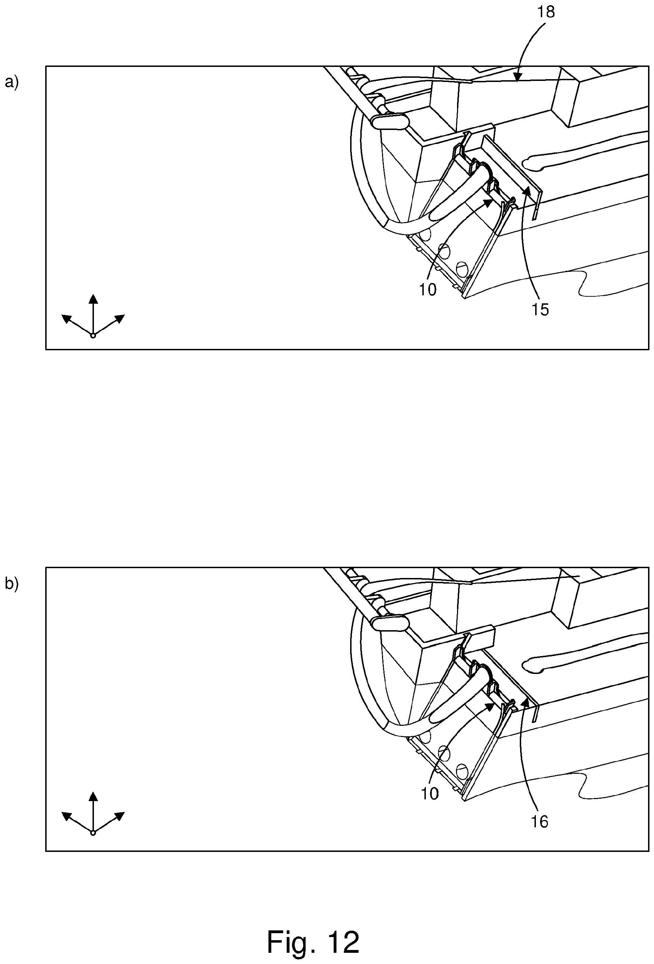

Subsequent to completing the delivery of fish into the storage tank, the delivery opening 14 is closed, and the fishing gear mover 7 with the at least one second connector part still locked thereto is moved back into the engagement position as shown in figure 12.a. The gate 15 is then brought into the lower gate position as shown in figure 12.b so that the people working on-board can walk to the connector 11.

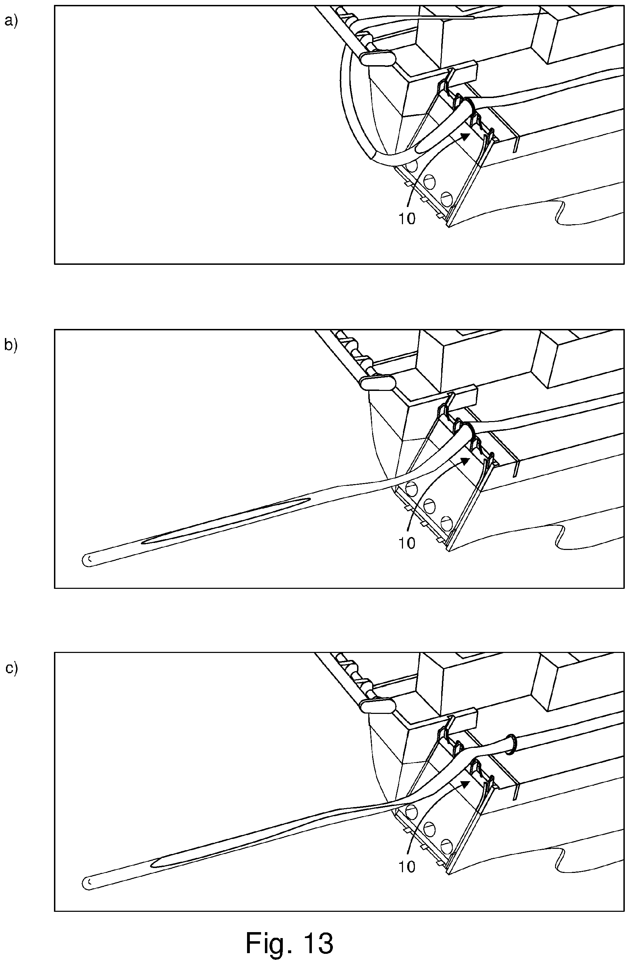

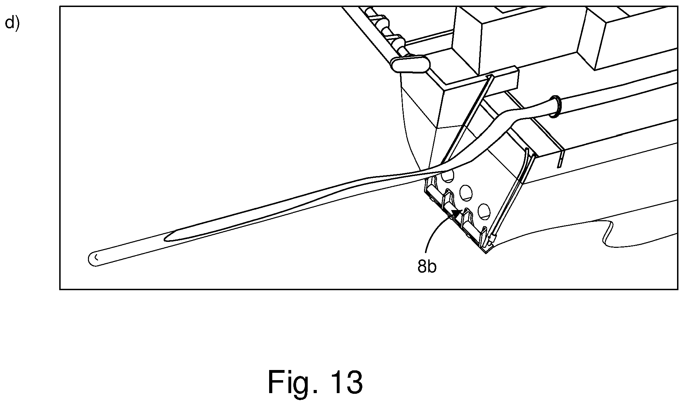

As shown in figure 13, the trawl is prepared for resumed towing behind the fishing vessel 1 in the following manner: The first connector part is connected to the second connector part as shown in figure 13.a. The lifting means 18 is released to allow the second trawl section back into the water as shown in figure 13.b, or alternatively, towing the at least one trawl out of the water over the slipway onto the trawl deck for repair or storage.

The connection between the second connector part and the guide is released, and the connector 11 is moved away from the guide and onto the deck as shown in figure 13.c. The fishing gear mover 7 is moved into either the primary or secondary parking position while ensuring that the trawl is not caught by the fishing gear mover 7 as shown in figure 13.d illustrating the secondary parking position 8b. The trawl is allowed to slide back into the water ready for resumed fishing (not shown).

### List of reference symbols used:

- 1: Fishing vessel
- 2: Fishing gear (trawl)
- 3: Distal end
- 4: Inner region
- 5: Second trawl section
- 7: Fishing gear mover
- 8: Parking position (of fishing gear mover); 8a primary position; 8b secondary position

- 10: Engagement position (of fishing gear mover)
- 11: Connector
- 13: First trawl section
- 14: Delivery opening
- 15: Gate
- 16: Gate in flush position
- 17: Delivery position
- 18: Lifting means (wire)

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Furthermore, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. Fishing vessel (1) comprising:
- a hull,
- a deck,
- at least one fishing gear (2) adapted to catch fish in a body of water and to retain the caught fish in an inner region of the fishing gear (2) until they are to be transferred to an inner space of the hull, wherein each of the at least one fishing gear (2) comprises:
- a net,
- a transfer opening providing an exit path for fish to be transferred, and
- a connector (11) arranged at least partly surrounding the transfer opening,
- pulling means for pulling the at least one fishing gear (2) at least partly out of the body of water,
- a transfer system for transferring fish from the inner region of at the least one fishing gear (2) and into the inner space of the hull via at least one delivery opening (14), the transfer system comprising:
- a fishing gear mover (7) comprising at least one guide with which it can be releasably connected to the connector (11) of each of the at least one fishing gear (2), the fishing gear mover (7) being arranged adjacent to the hull and movable between:
∘ a parking position (8) in which it is out of engagement with the at least one fishing gear (2),
∘ an engagement position in which a connection between the at least one guide and the at least one connector (11) is established, and
∘ a delivery position (17),
so that the fishing gear mover (7) can move each of the at least one connector (11) from the engagement position to the delivery position (17) in which the at least one connector (11) is aligned with the corresponding delivery opening (14), and
- transfer means adapted to apply a force to the fishing gear (2) and/or to the fish so that fish in the inner region of the at least one fishing gear (2) are hereby forced to move into the inner space via the delivery opening (14)
wherein
- the inner space of the hull is or comprises at least one tank for intermediate storage of caught fish in water, and
- the at least one fishing gear (2) is at least one trawl adapted to catch fish and to retain the caught fish in an inner volume of the trawl when the at least one trawl is towed behind the fishing vessel (1) through a fish-containing body of water,
wherein each of the at least one trawl comprises:
- a first trawl section (13) with a trawl opening through which fish can enter the inner volume, and
- a second trawl section (5) with a distal end (3) which is closed during fishing and a proximal end comprising the transfer opening at least partly surrounded by the connector (11),
wherein the first trawl section (13) and the second trawl section (5) are releasably connected to each other via a connection between the connector (11) forming a second connector part and a first connector partarranged on, such as being part of, the first trawl section (13) at the end thereof opposite the trawl opening, and
wherein the pulling means are adapted for pulling the at least one trawl partly onto the deck before the at least one connector (11) is connected to the fishing gear mover (7).

2. Fishing vessel (1) according to claim 1, wherein a separate one of each of the at least one tank is associated with each of the at least one trawl.

3. Fishing vessel (1) according to any of the preceding claims, further comprising a vertically movable gate (15) arranged adjacent to the deck at a distance from a stern of the fishing vessel (1), which gate (15) can move between:
- a lower gate position (16) in which an upper edge of the gate (15) is flush with the deck or located below the deck, and
- an upper position in which the gate (15) can lift the at least one fishing gear (2) to a height in which, for each fishing gear (2), the connector (11) becomes aligned with the guide of the fishing gear mover (7) provided that the connector (11) is positioned between the guide and the gate (15) before the gate (15) is moved from the lower gate position (16) to the upper position.

4. Fishing vessel (1) according to any of the preceding claims, wherein, for each fishing gear (2), auxiliary winches or other lifting means, are connected to the at least one connector (11) for assisting the positioning of the connector (11) in the guide of the fishing gear mover (7).

5. Fishing vessel (1) according to any of the preceding claims, wherein the at least one guide comprises a locking mechanism for establishing the releasable locking between the at least one guide and the at least one connector (11).

6. Fishing vessel (1) according to any of the preceding claims, wherein the number of fishing gear (2) is one to five, such as three.

7. Method of transferring fish from an inner region of at least one fishing gear (2) into an inner space of a hull of a fishing vessel (1) according to any of the preceding claims, the method comprising the following steps:
- while the fishing gear mover (7) is in the parking position (8), pulling the at least one fishing gear (2) at least partly out of the body of water by use of the pulling means, so that for each of the at least one fishing gear (2), the connector (11) is located above the water while the inner region containing caught fish remains in the water, and
- moving the fishing gear mover (7) to the engagement position,
performing the following steps for each of the at least one fishing gear (2):
- bringing the connector (11) into engagement with the guide, and
- establishing a releasable locking between the guide and the connector (11),
then:
- moving the fishing gear mover (7) to the delivery position (17) so that the at least one connector (11) is brought into alignment with a corresponding delivery opening (14),
- opening the at least one delivery opening (14), and
- using the transfer means to transfer the fish from the inner region of the at least one fishing gear (2) and into the inner space via the delivery opening (14),
subsequent to completing the delivery of fish into the inner space:
- closing the at least one delivery opening (14), and
- moving the fishing gear mover (7) with the at least one connector (11) still locked thereto into the engagement position,
- releasing the connection between the at least one connector (11) and the guide, and
then:
- moving the fishing gear mover (7) into the parking position (8) while ensuring that the at least one fishing gear (2) is not caught by the fishing gear mover (7), and
- letting the at least one fishing gear (2) move back into the water ready for resumed fishing or pulling the entire fishing gear (2) onto the deck for storage or repair.

8. Method according to claim 7 for transferring fish into said at least one tank ,
the method comprising the following steps:
- while the fishing gear mover (7) is in a parking position (8), pulling the at least one trawl partly onto the deck by use of the pulling means, so that for each of the at least one trawl, the connector (11) is located on or above the deck while the inner volume containing caught fish remains in the water, and so that each of the at least one second trawl section (5) is aligned with one of the at least one guide of the fishing gear mover (7), and
- moving the fishing gear mover (7) to the engagement position whereby each of the at least one second trawl section (5) becomes partly surrounded by one of the at least one guide,
performing one of the following sequences of steps for each of the at least one trawl:
a) :
- letting the trawl move aft wards until the second connector part is brought into engagement with the surrounding guide,
- establishing a releasable locking between the guide and the second connector part,
- disconnecting the first connector part from the second connector part, and
- pulling the first trawl section (13) away from the second trawl section (5) and onto the deck for temporary storage, or
b) :
- disconnecting the first connector part from the second connector part,
- optionally pulling the first trawl section (13) away from the second trawl section (5) and further onto the deck for temporary storage,
- letting the second trawl section (5) move aft wards until the second connector part is brought into engagement with the surrounding guide, and
- establishing a releasable locking between the guide and the second connector part,
then:
- moving the fishing gear mover (7) to the delivery position (17) so that the at least one second connector part is brought into alignment with a corresponding delivery opening (14),
- opening the at least one delivery opening (14), and
- lifting the distal end (3) of each of the at least one second trawl section (5) upwards and out of the water by use of the lifting means (18) so that fish in the inner volume of the second trawl section (5) are hereby forced to move into the tank via the delivery opening (14),
subsequent to completing the delivery of fish into the at least one tank:
- closing the at least one delivery opening (14), and
- moving the fishing gear mover (7) with the at least one second connector part still locked thereto into the engagement position,
performing one of the following sequences of steps for each of the at least one trawl:
a) :
- pulling the first trawl section (13) towards the second trawl section (5),
- connecting the first connector part to the second connector part to form an assembled connector (11),
- releasing the connection between the second connector part and the guide,
- pulling the connector (11) away from the guide and onto the deck, or
b) :
- releasing the connection between the second connector part and the guide,
- pulling the second connector part away from the guide and onto the deck,
- connecting the first connector part to the second connector part to form an assembled connector (11), and
then:
- moving the fishing gear mover (7) into a parking position (8) while ensuring that the at least one trawl is not caught by the fishing gear mover (7), and
- letting the at least one trawl slide back into the water ready for resumed towing behind the fishing vessel (1) or pulling the entire at least one trawl onto the deck for storage or repair.

9. Method according to claim 8, comprising the use of a fishing vessel (1) according to claim 3, the method comprising the following steps:
- bringing the gate (15) into the lower gate position (16) before the step of pulling the at least one trawl partly onto the deck,
- subsequent to the step of moving the fishing gear mover (7) into the engagement position and prior to bringing the at least one second connector part into engagement with the at least one guide, letting the at least one trawl move aft wards until the at least one connector (11) is located between the gate (15) and the fishing gear mover (7),
- then bringing the gate (15) into the upper position thereby lifting the at least one trawl upwards in order to assist the subsequent movement of the at least one second connector part into engagement with the at least one guide, and
- bringing the gate (15) into the lower gate position (16) before the at least one first connector part is disconnected from the at least one second connector part.

10. Method according to claim 9, further comprising the step of bringing the gate (15) into the upper position subsequent to the step of pulling the at least one first trawl section away from the at least one second trawl section (5) and onto the deck and maintaining the gate (15) in the upper position until the delivery of fish from the inner volume of the at least one trawl and into the at least one tank has been completed.

11. Method according to claim 10, further comprising the following step:
subsequent to moving the fishing gear mover (7) with the at least one second connector part still locked thereto into the engagement position,
bringing the gate (15) into the lower gate position (16).

## Patentansprüche

1. Fischereischiff (1), umfassend:
- einen Rumpf,
- ein Deck,
- mindestens ein Fanggerät (2), das dazu ausgelegt ist, Fische in einem Gewässer zu fangen und die gefangenen Fische in einem Innenbereich des Fanggeräts (2) zu halten, bis sie in einen Innenraum des Rumpfes transferiert werden, wobei jedes des mindestens einen Fanggeräts (2) Folgendes umfasst:
- ein Netz,
- eine Transferöffnung, die einen Austrittspfad für zu transferierenden Fisch bereitstellt, und
- einen Verbinder (11), der zumindest teilweise die Transferöffnung umgebend angeordnet ist,
- Ziehmittel zum Ziehen des mindestens einen Fanggeräts (2) zumindest teilweise aus dem Gewässer,
- ein Transfersystem zum Transferieren von Fisch aus dem Innenbereich des mindestens einen Fanggeräts (2) und in den Innenraum des Rumpfs über mindestens eine Abgabeöffnung (14), wobei das Transfersystem Folgendes umfasst:
- eine Fanggerätebewegungsvorrichtung (7), die mindestens eine Führung umfasst, mit der sie lösbar mit dem Verbinder (11) von jedem des mindestens einen Fanggeräts (2) verbunden werden kann, wobei die Fanggerätebewegungsvorrichtung (7) neben dem Rumpf angeordnet ist und zwischen Folgendem bewegbar ist:
∘ einer Parkposition (8), in der sie nicht in das mindestens eine Fanggerät (2) eingreift,
o einer Eingriffsposition, in der eine Verbindung zwischen der mindestens einen Führung und dem mindestens einen Verbinder (11) hergestellt ist, und
∘ einer Abgabeposition (17),
sodass die Fanggerätebewegungsvorrichtung (7) jeden des mindestens einen Verbinders (11) von der Eingriffsposition zu der Abgabeposition (17) bewegen kann, in der der mindestens eine Verbinder (11) mit der entsprechenden Abgabeöffnung (14) ausgerichtet ist, und
- Transfermittel, die dazu angepasst sind, eine Kraft auf das Fanggerät (2) und/oder auf den Fisch auszuüben, sodass Fische in dem Innenbereich des mindestens einen Fanggeräts (2) dadurch dazu gezwungen werden, sich über die Abgabeöffnung (14) in den Innenraum zu bewegen,
wobei
- der Innenraum des Rumpfs mindestens ein Tank zur Zwischenlagerung von gefangenem Fisch in Wasser ist oder diesen umfasst und
- das mindestens eine Fanggerät (2) mindestens ein Schleppnetz ist, das dazu ausgelegt ist, Fische zu fangen und die gefangenen Fische in einem Innenvolumen des Schleppnetzes zu halten, wenn das mindestens eine Schleppnetz hinter dem Fischereischiff (1) durch ein fischhaltiges Gewässer gezogen wird,
wobei jedes des mindestens einen Schleppnetzes Folgendes umfasst:
- einen ersten Schleppnetzabschnitt (13) mit einer Schleppnetzöffnung, durch die Fische in das Innenvolumen eintreten können, und
- einen zweiten Schleppnetzabschnitt (5) mit einem distalen Ende (3), das während des Fischens geschlossen ist, und einem proximalen Ende, umfassend die Transferöffnung, die mindestens teilweise von dem Verbinder (11) umgeben ist,
wobei der erste Schleppnetzabschnitt (13) und der zweite Schleppnetzabschnitt (5) über eine Verbindung zwischen dem Verbinder (11), der ein zweites Verbinderteil bildet, und einem ersten Verbinderteil, das an dem ersten Schleppnetzabschnitt (13) an dem Ende davon gegenüber der Schleppnetzöffnung angeordnet ist, wie etwa ein Teil davon ist, lösbar miteinander verbunden sind und
wobei die Ziehmittel dazu ausgelegt sind, das mindestens eine Schleppnetz teilweise auf das Deck zu ziehen, bevor der mindestens eine Verbinder (11) mit der Fanggerätebewegungsvorrichtung (7) verbunden wird.

2. Fischereischiff (1) nach Anspruch 1, wobei ein separater einer von jedem des mindestens einen Tanks mit jedem des mindestens einen Schleppnetzes verbunden ist.

3. Fischereischiff (1) nach einem der vorhergehenden Ansprüche, ferner umfassend ein vertikal bewegbares Tor (15), das benachbart zu dem Deck in einem Abstand von einem Heck des Fischereischiffs (1) angeordnet ist, wobei sich das Tor (15) zwischen Folgendem bewegen kann:
- einer unteren Torposition (16), in der eine obere Kante des Tores (15) bündig mit dem Deck ist oder sich unter dem Deck befindet, und
- einer oberen Position, in der das Tor (15) das mindestens eine Fanggerät (2) auf eine Höhe anheben kann, in der für jedes Fanggerät (2) der Verbinder (11) mit der Führung der Fanggerätebewegungsvorrichtung (7) ausgerichtet wird, vorausgesetzt, dass der Verbinder (11) zwischen der Führung und dem Tor (15) positioniert ist, bevor das Tor (15) von der unteren Torposition (16) in die obere Position bewegt wird.

4. Fischereischiff (1) nach einem der vorhergehenden Ansprüche, wobei für jedes Fanggerät (2) Hilfswinden oder andere Hebemittel mit dem mindestens einen Verbinder (11) verbunden sind, um die Positionierung des Verbinders (11) in der Führung der Fanggerätebewegungsvorrichtung (7) zu unterstützen.

5. Fischereischiff (1) nach einem der vorhergehenden Ansprüche, wobei die mindestens eine Führung einen Verriegelungsmechanismus zum Herstellen der lösbaren Verriegelung zwischen der mindestens einen Führung und dem mindestens einen Verbinder (11) umfasst.

6. Fischereischiff (1) nach einem der vorhergehenden Ansprüche, wobei die Anzahl der Fanggeräte (2) eins bis fünf, wie etwa drei, beträgt.

7. Verfahren zum Transferieren von Fisch aus einem Innenbereich mindestens eines Fanggeräts (2) in einen Innenraum eines Rumpfes eines Fischereischiffs (1) nach einem der vorhergehenden Ansprüche, wobei das Verfahren die folgenden Schritte umfasst:
- während sich die Fanggerätebewegungsvorrichtung (7) in der Parkposition (8) befindet, Ziehen des mindestens einen Fanggeräts (2) mindestens teilweise aus dem Gewässer unter Verwendung der Ziehmittel, sodass sich für jedes des mindestens einen Fanggeräts (2) der Verbinder (11) über dem Wasser befindet, während der Innenbereich, der gefangenen Fisch enthält, im Wasser bleibt, und
- Bewegen der Fanggerätebewegungsvorrichtung (7) in die Eingriffsposition,
Durchführen der folgenden Schritte für jedes des mindestens einen Fanggeräts (2):
- Ineingriffbringen des Verbinders (11) mit der Führung und
- Herstellen einer lösbaren Verriegelung zwischen der Führung und dem Verbinder (11),
dann:
- Bewegen der Fanggerätebewegungsvorrichtung (7) in die Transferposition (17), sodass der mindestens eine Verbinder (11) mit einer entsprechenden Abgabeöffnung (14) in Ausrichtung gebracht wird,
- Öffnen der mindestens einen Abgabeöffnung (14) und
- Verwenden der Transfermittel, um die Fische aus dem Innenbereich des mindestens einen Fanggeräts (2) und in den Innenraum über die Abgabeöffnung (14) zu transferieren,
im Anschluss an Abschließen der Abgabe von Fischen in den Innenraum:
- Verschließen der mindestens einen Abgabeöffnung (14) und
- Bewegen der Fanggerätebewegungsvorrichtung (7), wobei der mindestens eine Verbinder (11) noch damit in der Eingriffsposition verriegelt ist,
- Lösen der Verbindung zwischen dem mindestens einen Verbinder (11) und der Führung und
dann:
- Bewegen der Fanggerätebewegungsvorrichtung (7) in die Parkposition (8), während sichergestellt wird, dass das mindestens eine Fanggerät (2) nicht von der Fanggerätebewegungsvorrichtung (7) erfasst wird, und
- Zulassen, dass sich das mindestens eine Fanggerät (2) zurück in das Wasser bewegt, um den Fischfang wieder aufzunehmen, oder Ziehen des gesamten Fanggeräts (2) zur Lagerung oder Reparatur auf das Deck.

8. Verfahren nach Anspruch 7 zum Transferieren von Fisch in den mindestens einen Tank, wobei das Verfahren die folgenden Schritte umfasst:
- während sich die Fanggerätebewegungsvorrichtung (7) in einer Parkposition (8) befindet, Ziehen des mindestens einen Schleppnetzes teilweise auf das Deck unter Verwendung der Ziehmittel, sodass sich für jedes des mindestens einen Schleppnetzes der Verbinder (11) auf oder über dem Deck befindet, während das Innenvolumen, das gefangenen Fisch enthält, im Wasser bleibt, und sodass jeder des mindestens einen zweiten Schleppnetzabschnitts (5) mit einer der mindestens einen Führung der Fanggerätebewegungsvorrichtung (7) ausgerichtet ist, und
- Bewegen der Fanggerätebewegungsvorrichtung (7) in die Eingriffsposition, wodurch jeder des mindestens einen zweiten Schleppnetzabschnitts (5) teilweise von einer der mindestens einen Führung umgeben wird,
Durchführen einer der folgenden Abfolgen von Schritten für jedes des mindestens einen Schleppnetzes:
a) :
- Zulassen, dass sich das Schleppnetz nach hinten bewegt, bis das zweite Verbinderteil mit der umgebenden Führung in Eingriff gebracht ist,
- Herstellen einer lösbaren Verriegelung zwischen der Führung und dem zweiten Verbinderteil,
- Trennen des ersten Verbinderteils von dem zweiten Verbinderteil und
- Ziehen des ersten Schleppnetzabschnitts (13) weg von dem zweiten Schleppnetzabschnitt (5) und auf das Deck zur vorübergehenden Lagerung oder
b):
- Trennen des ersten Verbinderteils von dem zweiten Verbinderteil,
- gegebenenfalls Ziehen des ersten Schleppnetzabschnitts (13) weg von dem zweiten Schleppnetzabschnitt (5) und weiter auf das Deck zur vorübergehenden Lagerung,
- Zulassen, dass sich der zweite Schleppnetzabschnitt (5) nach hinten bewegt, bis das zweite Verbinderteil mit der umgebenden Führung in Eingriff gebracht ist, und
- Herstellen einer lösbaren Verriegelung zwischen der Führung und dem zweiten Verbinderteil,
dann:
- Bewegen der Fanggerätebewegungsvorrichtung (7) in die Transferposition (17), sodass der mindestens eine zweite Verbinderteil mit einer entsprechenden Abgabeöffnung (14) in Ausrichtung gebracht wird,
- Öffnen der mindestens einen Abgabeöffnung (14) und
- Anheben des distalen Endes (3) von jedem des mindestens einen zweiten Schleppnetzabschnitts (5) nach oben und aus dem Wasser unter Verwendung der Hebemittel (18), sodass Fische im Innenvolumen des zweiten Schleppnetzabschnitts (5) dadurch dazu gezwungen werden, sich über die Abgabeöffnung (14) in den Tank zu bewegen,
im Anschluss an Abschließen der Abgabe von Fischen in den mindestens einen Tank:
- Verschließen der mindestens einen Abgabeöffnung (14) und
- Bewegen der Fanggerätebewegungsvorrichtung (7), wobei der mindestens eine zweite Verbinderteil noch damit in der Eingriffsposition verriegelt ist,
Durchführen einer der folgenden Abfolgen von Schritten für jedes des mindestens einen Schleppnetzes:
a) :
- Ziehen des ersten Schleppnetzabschnitts (13) in Richtung des zweiten Schleppnetzabschnitts (5),
- Verbinden des ersten Verbinderteils mit dem zweiten Verbinderteil, um einen zusammengebauten Verbinder (11) zu bilden,
- Lösen der Verbindung zwischen dem zweiten Verbinderteil und der Führung,
- Ziehen des Verbinders (11) weg von der Führung und auf das Deck oder
b):
- Lösen der Verbindung zwischen dem zweiten Verbinderteil und der Führung,
- Ziehen des zweiten Verbinderteils weg von der Führung und auf das Deck,
- Verbinden des ersten Verbinderteils mit dem zweiten Verbinderteil, um einen zusammengebauten Verbinder (11) zu bilden, und
dann:
- Bewegen der Fanggerätebewegungsvorrichtung (7) in eine Parkposition (8), während sichergestellt wird, dass das mindestens eine Schleppnetz nicht von der Fanggerätebewegungsvorrichtung (7) erfasst wird, und
- Zulassen, dass mindestens ein Schleppnetzes zurück in das Wasser gleitet, bereit für wiederaufgenommenes Schleppen hinter dem Fischereischiff (1), oder Ziehen des gesamten mindestens einen Schleppnetzes zur Lagerung oder Reparatur auf das Deck.

9. Verfahren nach Anspruch 8, umfassend die Verwendung eines Fischereischiffs (1) nach Anspruch 3, wobei das Verfahren die folgenden Schritte umfasst:
- Bringen des Tores (15) in die untere Torposition (16) vor dem Schritt des Ziehens des mindestens einen Schleppnetzes teilweise auf das Deck,
- im Anschluss an den Schritt des Bewegens der Fanggerätebewegungsvorrichtung (7) in die Eingriffsposition und vor dem Ineingriffbringen des mindestens einen zweiten Verbinderteils mit der mindestens einen Führung, Zulassen, dass sich das mindestens eine Schleppnetz nach hinten bewegt, bis sich der mindestens eine Verbinder (11) zwischen dem Tor (15) und der Fanggerätebewegungsvorrichtung (7) befindet,
- dann Bringen des Tores (15) in die obere Position, wodurch das mindestens eine Schleppnetz nach oben gehoben wird, um die anschließende Bewegung des mindestens einen zweiten Verbinderteils in Eingriff mit der mindestens einen Führung zu unterstützen, und
- Bringen des Tores (15) in die untere Torposition (16), bevor das mindestens eine erste Verbinderteil von dem mindestens einen zweiten Verbinderteil getrennt wird.

10. Verfahren nach Anspruch 9, ferner umfassend den Schritt des Bringens des Tores (15) in die obere Position im Anschluss an den Schritt des Ziehens des mindestens einen ersten Schleppnetzabschnitts weg von dem mindestens einen zweiten Schleppnetzabschnitt (5) und auf das Deck und des Haltens des Tores (15) in der oberen Position, bis die Abgabe von Fisch aus dem Innenvolumen des mindestens einen Schleppnetzes und in den mindestens einen Tank abgeschlossen ist.

11. Verfahren nach Anspruch 10, ferner umfassend den folgenden Schritt:
im Anschluss an das Bewegen der Fanggerätebewegungsvorrichtung (7), wobei der mindestens eine zweite Verbinderteil noch damit in der Eingriffsposition verriegelt ist,
Bringen des Tores (15) in die untere Torposition (16).

## Revendications

1. Bateau de pêche (1) comprenant :
- une coque,
- un pont,
- au moins un engin de pêche (2) adapté pour attraper du poisson dans une masse d'eau et pour retenir le poisson attrapé dans une zone interne de l'engin de pêche (2) jusqu'à ce qu'il soit transféré vers un espace interne de la coque, chacun du au moins un engin de pêche (2) comprenant :
- un filet,
- une ouverture de transfert fournissant un trajet de sortie pour les poissons à transférer, et
- un connecteur (11) agencé entourant au moins en partie l'ouverture de transfert,
- des moyens de traction pour tirer le au moins un engin de pêche (2) au moins en partie hors de la masse d'eau,
- un système de transfert destiné à transférer les poissons à partir de la zone interne du au moins un engin de pêche (2) et jusque dans l'espace interne de la coque par l'intermédiaire d'au moins une ouverture de distribution (14), le système de transfert comprenant :
- un dispositif de déplacement (7) d'engin de pêche comprenant au moins un guide avec lequel il peut être relié de manière amovible au connecteur (11) de chacun du au moins un engin de pêche (2), le dispositif de déplacement (7) d'engin de pêche étant agencé adjacent à la coque et mobile entre :
∘ une position de stationnement (8) dans laquelle il n'est pas mis en prise avec le au moins un engin de pêche (2),
∘ une position de mise en prise dans laquelle une liaison entre le au moins un guide et le au moins un connecteur (11) est établie, et
∘ une position de distribution (17),
afin que le dispositif de déplacement (7) d'engin de pêche puisse déplacer chacun du au moins un connecteur (11) de la position de mise en prise à la position de distribution (17) dans laquelle le au moins un connecteur (11) est aligné avec l'ouverture de distribution correspondante (14), et
- un moyen de transfert adapté pour appliquer une force à l'engin de pêche (2) et/ou aux poissons afin que les poissons dans la zone interne du au moins un engin de pêche (2) soient ainsi forcés de se déplacer dans l'espace interne par l'intermédiaire de l'ouverture de distribution (14)
- ledit espace interne de la coque étant ou comprenant au moins un réservoir destiné au stockage intermédiaire des poissons attrapés dans l'eau, et
- ledit au moins un engin de pêche (2) étant au moins un chalut adapté pour attraper du poisson et pour retenir le poisson attrapé dans un volume interne du chalut lorsque le au moins un chalut est remorqué derrière le bateau de pêche (1) à travers une masse d'eau contenant les poissons,
chacun du au moins un chalut comprenant :
- une première section (13) de chalut dotée d'une ouverture de chalut à travers laquelle les poissons peuvent entrer dans le volume interne, et
- une seconde section (5) de chalut avec une extrémité distale (3) fermée durant la pêche et une extrémité proximale comprenant l'ouverture de transfert entourée au moins en partie par le connecteur (11),
ladite première section (13) de chalut et ladite seconde section (5) de chalut étant reliées de manière amovible l'une à l'autre par l'intermédiaire d'une liaison entre le connecteur (11) formant une seconde partie de connecteur et une première partie de connecteur agencée sur, par exemple en faisant partie, la première section (13) de chalut au niveau de son extrémité opposée à l'ouverture de chalut, et
lesdits moyens de traction étant adaptés pour tirer partiellement le au moins un chalut sur le pont avant que le au moins un connecteur (11) ne soit relié au dispositif de déplacement (7) d'engin de pêche.

2. Bateau de pêche (1) selon la revendication 1, un réservoir distinct de chacun du au moins un réservoir étant associé à chacun du au moins un chalut.

3. Bateau de pêche (1) selon l'une quelconque des revendications précédentes, comprenant en outre une porte mobile verticalement (15) agencée adjacente au pont à distance d'une poupe du bateau de pêche (1), laquelle porte (15) peut se déplacer entre :
- une position de porte inférieure (16) dans laquelle un bord supérieur de la porte (15) affleure le pont ou est situé en dessous du pont, et
- une position supérieure dans laquelle la porte (15) peut lever le au moins un engin de pêche (2) jusqu'à une hauteur dans laquelle, pour chaque engin de pêche (2), le connecteur (11) s'aligne avec le guide du dispositif de déplacement (7) d'engin de pêche à condition que le connecteur (11) soit positionné entre le guide et la porte (15) avant que la porte (15) ne soit déplacée de la position inférieure de porte (16) à la position supérieure.

4. Bateau de pêche (1) selon l'une quelconque des revendications précédentes, pour chaque engin de pêche (2), des treuils auxiliaires ou d'autres moyens de levage, étant liés à l'au moins un connecteur (11) pour aider au positionnement du connecteur (11) dans le guide du dispositif de déplacement (7) d'engin de pêche.

5. Bateau de pêche (1) selon l'une quelconque des revendications précédentes, ledit au moins un guide comprenant un mécanisme de verrouillage destiné à établir le verrouillage libérable entre le au moins un guide et le au moins un connecteur (11).

6. Bateau de pêche (1) selon l'une quelconque des revendications précédentes, ledit nombre d'engins de pêche (2) étant de un à cinq, par exemple trois.

7. Procédé de transfert de poisson d'une zone interne d'au moins un engin de pêche (2) jusque dans un espace interne d'une coque d'un bateau de pêche (1) selon l'une quelconque des revendications précédentes, le procédé comprenant les étapes suivantes :
- pendant que le dispositif de déplacement (7) d'engin de pêche est dans la position de stationnement (8), traction du au moins un engin de pêche (2) au moins en partie hors de la masse d'eau à l'aide des moyens de traction, afin que pour chacun du au moins un engin de pêche (2), le connecteur (11) soit situé au-dessus de l'eau pendant que la zone interne contenant le poisson attrapé reste dans l'eau, et
- déplacement du dispositif de déplacement (7) d'engin de pêche vers la position de mise en prise,
la réalisation des étapes suivantes pour chacun du au moins un engin de pêche (2) :
- positionnement du connecteur (11) en prise avec le guide, et
- établissement d'un verrouillage libérable entre le guide et le connecteur (11),
ensuite :
- déplacement du dispositif de déplacement (7) d'engin de pêche vers la position de distribution (17) afin que le au moins un connecteur (11) soit aligné avec une ouverture de distribution correspondante (14),
- ouverture de l'au moins une ouverture de distribution (14), et
- utilisation du moyen de transfert pour transférer les poissons à partir de la zone interne du au moins un engin de pêche (2) et jusque dans l'espace interne par l'intermédiaire de l'ouverture de distribution (14),
après avoir terminé la distribution des poissons dans l'espace interne :
- fermeture de l'au moins une ouverture de distribution (14), et
- déplacement du dispositif de déplacement (7) d'engin de pêche avec l'au moins un connecteur (11) toujours verrouillé sur celui-ci dans la position de mise en prise,
- libération de la liaison entre le au moins un connecteur (11) et le guide, et
ensuite :
- déplacement du dispositif de déplacement (7) d'engin de pêche dans la position de stationnement (8) tout en s'assurant que le au moins un engin de pêche (2) n'est pas attrapé par le dispositif de déplacement (7) d'engin de pêche, et
- permission à l'au moins un engin de pêche (2) de revenir dans l'eau prêt à reprendre la pêche ou traction de l'ensemble de l'engin de pêche (2) sur le pont en vue du stockage ou la réparation.

8. Procédé selon la revendication 7 permettant de transférer les poissons dans ledit au moins un réservoir, le procédé comprenant les étapes suivantes :
- pendant que le dispositif de déplacement (7) d'engin de pêche est dans une position de stationnement (8), traction du au moins un chalut en partie sur le pont à l'aide des moyens de traction, afin que pour chacun du au moins un chalut, le connecteur (11) soit situé sur ou au-dessus du pont pendant que le volume interne contenant les poisson attrapés reste dans l'eau, et afin que chacune de la au moins une seconde section de chalut (5) soit alignée avec l'un du au moins un guide du dispositif de déplacement (7) de l'engin de pêche, et
- déplacement du dispositif de déplacement (7) d'engin de pêche vers la position de mise en prise moyennant quoi chacune de la au moins une seconde section (5) de chalut devient partiellement entourée par l'un du au moins un guide,
réalisation de l'une des séquences d'étapes suivantes pour chacun du au moins un chalut :
a) :
- permission au chalut de se déplacer vers l'arrière jusqu'à ce que le second connecteur soit amené en prise avec le guide environnant,
- établissement d'un verrouillage libérable entre le guide et la seconde partie de connecteur,
- déconnection de la première partie de connecteur de la seconde partie de connecteur, et
- traction de la première section (13) de chalut au loin de la seconde section de chalut (5) et jusque sur le pont en vue d'un stockage temporaire, ou
b) :
- séparation de la première partie de connecteur de la seconde partie connecteur,
- éventuellement traction de la première section (13) de chalut au loin de la seconde section de chalut (5) et en outre jusque sur le pont en vue d'un stockage temporaire,
- permission au second tronçon (5) de chalut de se déplacer vers l'arrière jusqu'à ce que la seconde partie de connecteur soit amenée en prise avec le guide environnant, et
- établissement d'un verrouillage libérable entre le guide et la seconde partie de connecteur,
ensuite :
- déplacement du dispositif de déplacement (7) d'engin de pêche vers la position de distribution (17) afin que la au moins une seconde partie de connecteur soit alignée avec une ouverture de distribution correspondante (14),
- ouverture de l'au moins une ouverture de distribution (14), et
- levage de l'extrémité distale (3) de chacune de la au moins une seconde section (5) de chalut vers le haut et hors de l'eau à l'aide des moyens de levage (18) afin que les poissons dans le volume interne de la seconde section (5) de chalut soient ainsi forcés de se déplacer jusque dans le réservoir par l'intermédiaire de l'ouverture de distribution (14),
après avoir terminé la distribution des poissons dans le au moins un réservoir :
- fermeture de l'au moins une ouverture de distribution (14), et
- déplacement du dispositif de déplacement (7) d'engin de pêche avec la au moins une seconde partie de connecteur toujours verrouillée sur celle-ci dans la position de mise en prise,
réalisation de l'une des séquences d'étapes suivantes pour chacun du au moins un chalut :
a) :
- traction de la première section (13) de chalut vers la seconde section (5) de chalut,
- liaison de la première partie de connecteur à la seconde partie de connecteur pour former un connecteur assemblé (11),
- libération de la liaison entre la seconde partie de connecteur et le guide,
- traction du connecteur (11) au loin du guide et sur le pont, ou
b) :
- libération de la liaison entre la seconde partie de connecteur et le guide,
- traction de la seconde partie de connecteur au loin du guide et sur le pont,
- liaison de la première partie de connecteur à la seconde partie de connecteur pour former un connecteur assemblé (11), et
ensuite :
- déplacement du dispositif de déplacement (7) d'engin de pêche dans une position de stationnement (8) tout en assurant que le au moins un chalut n'est pas attrapé par le dispositif de déplacement (7) d'engin de pêche, et
- permission à l'au moins un chalut de glisser à nouveau dans l'eau prêt à reprendre le remorquage derrière le bateau de pêche (1) ou traction de l'ensemble du au moins un chalut sur le pont en vue du stockage ou d'une réparation.

9. Procédé selon la revendication 8, comprenant l'utilisation d'un bateau de pêche (1) selon la revendication 3, le procédé comprenant les étapes suivantes :
- positionnement de la porte (15) dans la position de porte inférieure (16) avant l'étape de traction partielle du au moins un chalut sur le pont,
- après l'étape de déplacement du dispositif de déplacement (7) d'engin de pêche dans la position de mise en prise et avant d'amener la au moins une seconde partie de connecteur en prise avec le au moins un guide, la permission à l'au moins un chalut de se déplacer vers l'arrière jusqu'à ce que le au moins un connecteur (11) soit situé entre la porte (15) et le dispositif de déplacement (7) d'engin de pêche,
- ensuite positionnement de la porte (15) dans la position supérieure, levant ainsi le au moins un chalut vers le haut afin de faciliter le mouvement ultérieur de la au moins une seconde partie de connecteur en prise avec le au moins un guide, et
- positionnement de la porte (15) dans la position de porte inférieure (16) avant que la au moins une première partie de connecteur ne soit séparée de la au moins une seconde partie de connecteur.

10. Procédé selon la revendication 9, comprenant en outre l'étape de positionnement de la porte (15) dans la position supérieure après l'étape de traction de la au moins une première section de chalut au loin de la au moins une seconde section (5) de chalut et sur le pont et maintien de la porte (15) dans la position supérieure jusqu'à ce que la distribution des poissons à partir du volume interne du au moins un chalut et jusque dans le au moins un réservoir soit terminée.

11. Procédé selon la revendication 10, comprenant l'étape suivante :
après avoir déplacé le dispositif de déplacement (7) d'engin de pêche avec la au moins une seconde partie de connecteur toujours verrouillée sur celle-ci dans la position de mise en prise,
positionnement de la porte (15) dans la position de porte inférieure (16).
